Europäisches Patentamt

(19) European Patent Office

Office européen des brevets

(11) Numéro de publication : **0 301 658 B1**

(12) # FASCICULE DE BREVET EUROPEEN

(45) Date de publication du fascicule du brevet :
08.05.91 Bulletin 91/19

(21) Numéro de dépôt : 88201573.8

(22) Date de dépôt : 20.07.88

(51) Int. Cl.⁵ : **E04B 9/00**

(54) **Elément de couplage pour faux-plafonds.**

(30) Priorité : 28.07.87 BE 8700835

(43) Date de publication de la demande :
01.02.89 Bulletin 89/05

(45) Mention de la délivrance du brevet :
08.05.91 Bulletin 91/19

(84) Etats contractants désignés :
DE FR GB LU NL

(56) Documents cités :
EP-A- 0 037 615
NL-A- 8 302 515
US-A- 4 086 480

(73) Titulaire : **CHICAGO METALLIC
CONTINENTAL N.V.
Oude Sluisstraat 5
B-2110 WIJNEGEM (BE)**

(72) Inventeur : **Grard, Gausbert
Mattestraat 36
B-2910 Malderen (BE)**

(74) Mandataire : **Donné, Eddy
Bureau M.F.J. Bockstael nv Arenbergstraat 13
B-2000 Antwerpen (BE)**

## Description

Cette invention porte sur un élément de couplage pour faux-plafonds, et plus particulièrement sur un élément de couplage en forme de cavalier composé de deux branches verticales munies en leurs côtés opposés de crochets de couplage pour la fixation de profils, d'une entretoise reliant les deux branches entre elles à leurs extrémités supérieures et d'un élément de fixation placé au centre de l'entretoise.

Ces éléments de couplage en forme de cavalier font l'objet, entre autres, du brevet belge n° 900.449 et du brevet européen n° 37.615. Pour que ces éléments de couplage restent positionnés en équerre par rapport aux profils qui y sont fixés, ils sont pourvus de butées formées par des lèvres obtenues par cintrage à angle droit dans le plan de l'élément de couplage. Selon les brevets sus-mentionnés, ces lèvres sont situées dans le même plan que les cloisons profilées avec lesquelles elles sont en contact. Ces éléments de couplage présentent dès lors l'inconvénient que les lèvres peuvent être facilement faussées, et qu'ainsi, l'assemblage orthogonal entre d'une part, l'élément de couplage et d'autre part, les profils, n'est plus garanti.

Le brevet américain no 4.086.480 révèle un élément de couplage qui est montable entre deux profils. L'élément comprend des butées faisant contact avec les faces externes des bords supérieures des profils, ces butées étant formées par de lèvres pliables. Ces éléments de couplage présentent l'inconvénient qu'ils exigent des opérations supplémentaires pendant le montage. En outre il est possible que ladite livre sera déformée de façon incorrecte.

Cette invention a, dès lors, pour but de fournir un élément de couplage excluant systématique les inconvénients susmentionnés. Elle prévoit également un élément de couplage qui présente encore toute une série de caractéristiques favorable, comme on le verra dans la description qui suit.

A cet égard, l'invention concerne dès lors un élément de couplage pour faux-plafonds se composant de deux branches verticales munies à leurs côtés opposés de crochets de couplage pour la fixation de profils, d'une entretoise reliant les deux branches en leur extrémité supérieure et d'un élément de fixation placé au centre par rapport à l'entretoise, les branches à proximité des crochets de couplage étant munies de butées pouvant agir en interaction avec les profils à coupler, caractérisées par le fait qu'elles sont formées par les bords latéraux externes de lèvres cintrées dans le plan de l'élément de couplage, ces lèvres étant situées perpendiculaires par rapport à l'âme des profiles en interaction avec les crochets de couplage. Les autres caractéristiques de l'invention ressortiront de la description qui suit.

Dans le but de montrer avec plus de clarté les caractéristiques de l'invention, nous décrivons ci-dessous à titre d'exemple sans aucun caractère limitatif, une construction préférentielle, avec renvoi aux croquis annexés, où :

la figure 1 représente l'élément de couplage d'après l'invention

la figure 2 donne une vue à plus grande échelle suivant la flèche F2 dans la figure 1

la figure 3 donne une vue à plus grande échelle suivant la flèche F3 dans la figure 1.

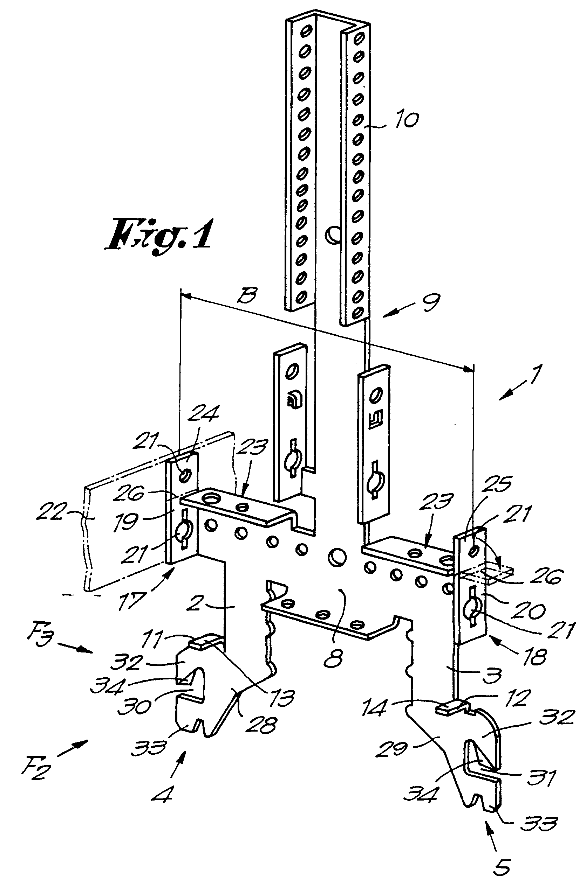

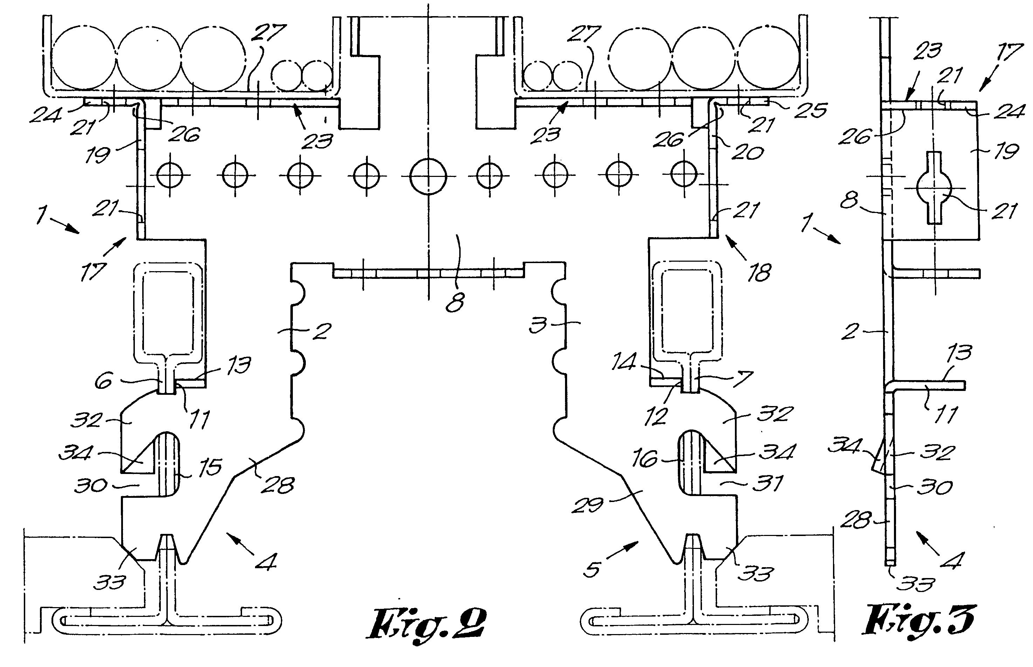

Comme indiqué aux figures 1 et 2, l'élément de couplage 1 consiste principalement en deux branches verticales 2 et 3 munies à leurs côtés opposés de crochets de couplage 4 et 5 pour la fixation parallèle de profils 6 et 7, d'une entretoise 8 joignant les deux branches 2 et 3 en leur extrémité supérieure et d'un élément de fixation 9 muni d'une suspension-vernier 10 (ou équivalente) placé au centre par rapport à l'entretoise 8.

Les branches 2 et 3 sont, à proximité des crochets de couplage 4 et 5, munies de butées qui peuvent agir en interaction avec les profils à coupler 6 et 7, et présentent la caractéristique particulière qu'elles sont, dans l'invention, formées par les bords latéraux 11 et 12 des lèvres 13 et 14 cintrées dans le plan de l'élément de couplage 1, ces lèvres étant situées perpendiculairement par rapport aux cloisons profilées en interaction avec les crochets de couplage 4 et 5.

Par branche 2 ou 3, on prévoit de préférence une lèvre, respectivement 13 et 14, les deux lèvres étant cintrées dans la même direction. Comme les lèvres 13 et 14 sont perpendiculaires aux cloisons profilées 15 et 16, il est clair qu'elles constituent une butée qui ne peut être faussée, ce qui a comme avantage le maintien de la position orthogonale de l'élément de couplage 1 par rapport aux profils 6 et 7, et donc également de la distance entre les profils.

Suivant une autre caractéristique de l'invention, les extrémités 17 et 18 de l'entretoise 8 sont pliées à 90 degrés, avec l'avantage que, d'une part, l'élément de couplage est renforcé et que d'autre part, la largeur totale B reste limitée. En outre, les brides 19 et 20 peuvent être pourvues de moyens tels qu'alésages 21, pour la fixation de divers accessoires, tels que plaques 22, guides-câbles, etc.

Les brides 19 et 20 arriveront de préférence plus haut que le bord supérieur 23 de l'entretoise 8, de manière à ce qu'entre les tronçons supérieurs 24 et 25 et l'élément de fixation 9, il soit possible d'installer des caniveaux de câble. Les brides 19 et 20 seront toutefois munies de préférence de bossages 26 suivant lesquels les tronçons 24 et 25 peuvent être cintrés jusque dans un plan horizontal, après quoi, comme le montre la figure 2, des caniveaux de câble 27 de largeur arbitraire pourront être montés sur le côté supérieur 23 de l'entretoise 8.

Les crochets de couplage 4 et 5 de l'élément de couplage 1 d'après l'invention consistent de préférence en des lèvres 28 et 29 orientées latéralement et aménagées aux extrémités inférieures des branches 2 et 3, qui peuvent être en interaction avec des rainures ménagées dans les cloisons profilées 15 et 16 susmentionnées.

Une encoche latérale, respectivement 30 et 31, divise chaque lèvre 28 et 29 en une branche supérieure 32 et une branche inférieure 33. Au moins l'une des deux branches, 32 ou 33, et dans la construction illustrée, la branche supérieure 32, est en forme de crochet et présente une extrémité 34 légèrement pliée. Les extrémités pliées constituent un renforcement des lèvres 28 et 29 et forment également un crochet empêchant les profils 6 et 7 de se détacher. La forme recourbée des extrémités 34 est encore mieux illustrée par la vue de profil à la figure 3.

La présente invention n'est en aucune façon limitée à la construction décrite comme exemple et représentée dans les figures, en effet, cet élément de couplage peut être réalisé en diverses formes et dimensions sans sortir du cadre de l'invention défini par les revendications.

## Revendications

1. Elément de couplage pour faux-plafonds composé de deux branches verticales (2, 3), munies à leurs côtés opposés de crochets de couplage (4, 5) pour la fixation de profils (6, 7), d'une entretoise (8) reliant les deux branches (2, 3) en leur extrémité supérieure et d'un élément de fixation (9) placé au centre par rapport à l'entretoise, les branches (2), (3) à proximité des crochets de couplage (4, 5) étant munies de butées pouvant être en interaction avec les profils (6, 7), et caractérisées par le fait qu'elles sont formées par les bords latéraux externes (11, 12) de lèvres (13, 14) cintrées dans le plan de l'élément de couplage (1), les lèvres (13, 14) étant situées perpendiculairement à l'âme des profils (15, 16) en interaction avec les crochets de couplage.

2. Elément de couplage suivant la revendication 1, caractérisé par le fait que les extrémités opposées (17, 18) de l'entretoise (8) sont cintrées à 90 degrés dans le plan vertical.

3. Elément de couplage suivant la revendication 2, caractérisé par le fait que les extrémités recourbées de l'entretoise (8) forment des brides (19, 20), dont les tronçons supérieurs (24, 25) arrivent au-dessus du côté supérieur (23) de l'entretoise (8), ces brides (19, 20) étant pourvues de bossages (26) qui permettent le cintrage des tronçons supérieurs (24, 25) jusque dans le plan horizontal.

4. Elément de couplage suivant la revendication 3, caractérisé par le fait que les brides (19, 20) contiennent des moyens (21) pour la fixation d'accessoires (22).

5. Elément de couplage suivant la revendication 1, caractérisé par le fait que chaque crochet de couplage (4, 5) se compose d'une lèvre orientée latéralement (28, 29) aménagée à l'extrémité d'une branche (2, 3), et qu'une encoche latérale (30, 31) partage en une branche supérieure (32) et une branche inférieure (33), l'une des deux branches (32, 33) au moins étant en forme de crochet et présentant une extrémité légèrement pliée (34) en forme de crochet.

## Ansprüche

1. Ein Verbindungselement für eingeschobene Decken, bestehend aus zwei vertikalen Armen (2, 3), die an ihren entgegengesetzten Enden mit Verbindungshaken (4, 5) zur Befestigung von Profilen (6, 7) versehen sind, einer Verstrebung (8), welche die beiden Arme (2, 3) an ihrem oberen Ende verbindet und einem Befestigungselement (9), welches in bezug auf die Verstrebung in der Mitte angeordnet ist, wobei die Arme (2, 3) in der Nähe der Anschlußhaken (4, 5) mit Anschlägen versehen sind, die mit den Profilen (6, 7) zusammenarbeiten können und die dadurch gekennzeichnet sind, daß sie durch die äußeren Seitenkanten (11, 12) von zwei in der Ebene des Verbindungselementes gebogenen Zungen (13, 14) gebildet werden, wobei die Zungen (13,, 14) vertikal zum Kern der Profile (15, 16) angeordnet sind, die mit den Verbindungshaken zusammenarbeiten.

2. Das Verbindungselement gemäß Anspruch 1, gekennzeichnet dadurch, daß die entgegengesetzten Enden (17, 18) der Verstrebung (8) um 90 Grad in der vertikalen Ebene gebogen sind.

3. Das Verbindungselement gemäß Anspruch 2, gekennzeichnet dadurch, daß die umgebogenen Enden der Verstrebung (8) Bügel (19, 20) bilden, deren obere Abschnitte (24, 25) über die obere Kante (23) der Verstrebung (8) hinausreichen, wobei die Bügel mit Wülsten (26) versehen sind, welche das Umbiegen der oberen Abschnitte (24, 25) bis zur horizontalen Ebene erlauben.

4. Das Verbindungselement gema Anspruch 3, gekennzeichnet dadurch, daß die Bügel (19, 20) Mittel (21) zur Befestigung von Zubehörteilen (22) aufweisen.

5. Das Verbindungselement gemäß Anspruch 1, gekennzeichnet dadurch, daß jeder Verbindungshaken (4, 5) aus einer lateral ausgerichteten Zunge (28, 29) besteht, die am Ende eines Armes (2, 3) angeordnet ist, und die von einer lateralen Kerbe (30, 31) in eine obere Abzweigung (32) und eine untere Abzweigung (33) geteilt wird, wobei eine der beiden Abzweigungen (32, 33) mindestens in Hakenform ist und ein leicht gebogenes Ende (34) in Form eines Hakens aufweist.

**Claims**

1. Coupling element for false ceilings consisting of two vertical arms (2, 3) provided on their opposite sides with coupling hooks (4, 5) for the attachment of the profiles (6, 7), a crosspiece (8) connecting the two arms (2, 3) on their upper extremity and an attachment element (9) located in the centre in relation to the crosspiece, the arms (2), (3) at the proximity of the coupling hooks (4, 5) being provided with stops which can act in interaction with the profiles (6, 7), and characterised in that they are formed by the external lateral edges (11, 12) of the lips (13, 14) bent in the plane of the coupling element (1), these lips (13, 14) being situated perpendicular to the web of the profiles (15, 16) in interaction with the coupling hooks.

2. Coupling element according to claim 1, characterised in that the opposite extremities (17, 18) of the crosspiece (8) are bent at 90 degrees in the vertical plane.

3. Coupling element according to claim 2, characterised in that the bent over extremities of the crosspiece (8) form the flanges (19, 20), of which the upper sections (24, 25) come above the upper side (23) of the crosspiece (8), these flanges (19, 20) being provided with embossments (26) which allow the bending of the upper sections (24, 25) to in the horizontal plane.

4. Coupling element according to claim 3, characterised in that the flanges (19, 20) contain means (21) for the attachment of accessories (22).

5.- Coupling element according to claim 1, characterised in that each coupling hook (4, 5) consists of a lip directed laterally arranged at the extremity of an arm (2, 3), and that a lateral slot (30, 31) divides it into an upper arm (32) and a lower arm (33), one of the two arms (32, 33) at least being in hook form and showing one extremity slightly bent (34) in hook form.

*Fig.1*

*Fig.3*

*Fig.2*